# FASCICULE DE BREVET EUROPEEN

(11) **EP 2 217 932 B1**
(45) Date de publication et mention de la délivrance du brevet: **18.05.2011**
(21) Numéro de dépôt: 08861213.0
(22) Date de dépôt: 02.12.2008
(51) Int. Cl.: G01N 35/10, G01N 1/18

(54) **VANNE D'ECHANTILLONNAGE MULTI-POSITIONS**
PROBENAHMEVENTIL MIT MEHREREN POSITIONEN
MULTIPLE-POSITION SAMPLING VALVE

(30) Priorité: 07.12.2007 FR 0759631
(43) Date de publication de la demande: 18.08.2010
(73) Titulaire: HORIBA ABX SAS, 34000 Montpellier (FR)
(72) Inventeur: BOUCHENTOUF, Olivier, F-34070 Monptellier (FR)
(74) Mandataire: Domange, Maxime
(86) Numéro de dépôt international: PCT/FR2008/052174
(87) Numéro de publication internationale: WO 2009/077696

(56) Documents cités:
- EP-A- 0 220 430
- EP-A- 0 545 560
- US-A- 3 978 888
- US-A- 4 625 569
- US-A- 4 948 565
- US-A- 5 460 055
- US-A- 5 691 486

## Description

### Arrière plan de l'invention

La présente invention se rapporte au domaine général de l'analyse de fluides. L'invention s'intéresse, en particulier, à l'analyse automatique de fluides, qu'ils soient biologiques ou non.

Dans une application particulière, le fluide est d'origine humaine ou animale. L'invention intéresse alors particulièrement le domaine des analyses de sang. Dans ce domaine, il est particulièrement utile de concevoir des systèmes et procédés réalisant ces analyses de façon automatique.

Dans les systèmes et procédés connus pour les analyses hématologiques, les échantillons de sang total sont, en général, prélevés directement sur un patient, puis mélangés à un anticoagulant. Le prélèvement de sang de départ est alors contenu dans un récipient de prélèvement, le plus souvent un tube, fermé ou non par un bouchon. On parle alors, traditionnellement, d'échantillons de sang dit total ou complet.

L'analyse des fluides, notamment l'analyse hématologique, nécessite généralement de disposer de plusieurs fractions de l'échantillon de sang total. Cela permet de réaliser plusieurs analyses ou mesures sur le même échantillon de départ.

Dans le domaine de l'analyse de sang, les analyseurs sanguins connus permettent de mesurer différents paramètres et de comptabiliser un certain nombre d'éléments constitutifs du sang afin de renseigner l'état de santé des patients. De tels paramètres sont, notamment, les globules rouges et blancs, l'hémoglobine ou encore les plaquettes.

Il est alors nécessaire que l'échantillon de départ soit divisé en plusieurs fractions, appelées aliquotes. Ces aliquotes sont mélangées à différents réactifs et subissent différents traitements selon les analyses souhaitées.

Divers systèmes et procédés de prélèvement du sang dans le tube de prélèvement, en une seule fois, ont été développés. Cela évite de manipuler le tube plusieurs fois et, donc, de risquer une contamination du sang contenu dans le tube de prélèvement. Cela diminue, en outre, le temps d'occupation de l'analyseur et augmente les cadences d'analyse, en libérant le tube de prélèvement au plus tôt.

En outre, généralement, les systèmes et procédés connus permettent que le volume total, prélevé en une seule fois, soit plus faible que si l'échantillon de sang était prélevé en plusieurs fois.

Les systèmes et procédés connus aliquotent donc le sang avant de le mélanger à différents réactifs et de le distribuer dans différents moyens de récupération et/ou d'analyse. Les aliquotes préparées avec différents réactifs permettent la détermination, par exemple par des systèmes de mesure optique, de la valeur des paramètres de l'échantillon et procurent ainsi les résultats d'analyse pour l'ensemble des éléments constitutifs du sang.

Les systèmes et procédés connus pour réaliser le fractionnement de l'échantillon sanguin en de multiples aliquotes, sont généralement des vannes d'échantillonnage permettant de prélever différents aliquotes en une seule fois et de les distribuer en plusieurs temps et, ce, afin de libérer le tube le plus vite possible. Les aliquotes présentes dans la vanne sont ensuite distribuées vers les mêmes moyens de récupération et/ou d'analyse, les unes après les autres, ou vers des moyens de récupération et/ou d'analyse différents, de façon simultanée ou non.

Plus particulièrement, l'invention concerne donc le domaine des vannes d'échantillonnage permettant d'échantillonner un fluide, en vue de plusieurs analyses utilisant divers réactifs.

La demande de brevet français FR 2 622 692, au nom de la demanderesse, décrit une vanne d'échantillonnage, dite linéaire, où un élément mobile central est pris en sandwich entre deux éléments fixes. Il est nécessaire que les faces des éléments en contact frictionnel l'une avec l'autre, soient rectifiées. Comme il est alors nécessaire que quatre faces soient rectifiées pour fabriquer une vanne selon ce document, le coût d'une telle vanne est élevé. Dans cette vanne, le déplacement de la partie mobile définit une section dans un canal présent dans la partie fixe relié à la partie mobile. Cette section est ensuite isolée par déplacement de la partie mobile et correspond au volume de l'aliquote qui sera utilisé.

D'autres vannes d'échantillonnage de type rotatives où un élément est mobile en rotation entre deux éléments fixes existent.

Une telle vanne est, par exemple, décrite dans le brevet US 4 948 565, déposé par la société FISHER SCIENTIFIC. Ici encore, il est nécessaire de rectifier très précisément quatre faces actives, ce qui entraîne un coût important. Les aliquotes prélevées dans une première position sont ensuite dispensées vers les systèmes de mesures dans une seconde position. Il y a ensuite rinçage de l'ensemble du système dans une troisième position. Dans la seconde position, il n'est pas possible de séparer au moins certaines aliquotes de sang des réactifs, et il peut y avoir contamination par migration des liquides, notamment lorsque certaines analyses ne sont pas effectuées. Par contamination, on entend ici, début de réaction entre une aliquote et un réactif, ainsi que mélange entre aliquotes de deux échantillons différents. Cela nécessite de dispenser chaque boucle avec du réactif neuf dès lors qu'il a été mis en contact avec du fluide à analyser, et même si aucune analyse n'a été faite ensuite. Cela entraîne du gaspillage de réactif ce qui est préjudiciable économiquement, bien sûr, mais également, souvent, écologiquement.

Le brevet US 6 662 826 de la société ABBOTT protège une vanne d'échantillonnage à quatre éléments. La fabrication d'une telle vanne nécessite l'usinage de six faces céramiques pour obtenir un bon fonctionnement, ce qui est extrêmement coûteux. En outre, cette vanne ne permet pas de distribution séquentielle vers un ou plusieurs moyens de récupération et/ou d'analyse. Ici encore, l'aliquote de sang n'est pas isolée physiquement des réactifs et il peut se produire des contaminations du prélèvement.

Le brevet US 5 390 552, déposé par la société TOA MEDICAL ELECTRONICS, décrit une vanne composée de trois éléments, dont deux sont fixes et un est mobile. Cette vanne présente ainsi les inconvénients des vannes présentées auparavant. En outre, cette vanne ne propose pas de distribution temporisée vers un même appareil de mesure.

Le brevet US 5 255 568, déposé par la société COULTER CORPORATION, décrit une vanne comportant trois éléments, dont deux sont fixes et le troisième, au milieu, est mobile. Là encore, il est nécessaire d'usiner très précisément quatre faces pour avoir de bons résultats. On ne trouve toujours pas la possibilité de temporisation de la distribution des aliquotes. Enfin, dans ce brevet, la vanne ne peut prendre que deux positions, la première correspondant à une aspiration des aliquotes et à un rinçage des boucles, et la seconde correspondant à la dispense des réactifs. De nouveau, les aliquotes de sang et les réactifs ne peuvent pas être physiquement séparés et il peut y avoir contamination et migration entre le sang et les réactifs.

US5691486 et EP0220430 décrivent aussi d'autres exemples de vannes d'échantillonnages avec la possibilité de deux positions fonctionnelles des éléments mobiles.

L'ensemble de ces vannes présentent, en outre, l'inconvénient d'une accessibilité limitée à l'intérieur des pièces pour pouvoir les nettoyer. En effet, lorsque les orifices doivent être purgés, le démontage n'est pas aisé. Il faut, en outre, lors du remontage de la vanne, bien s'assurer que les déplacements entre les pièces mobiles et fixes soient minutieusement ajustés. La multiplicité des éléments constitutifs de ces vannes est donc un inconvénient.

### Objet et résumé de l'invention

La présente invention a dont pour but principal de pallier tous les inconvénients présentés par les vannes d'échantillonnage de l'art antérieur, en proposant une vanne d'échantillonnage, permettant, à partir d'un même récipient de prélèvement, d'échantillonner un fluide en vue de plusieurs analyses utilisant des réactifs, ladite vanne comprenant deux éléments en contact l'un avec l'autre sur une de leurs faces dite face de contact, ces deux éléments étant mobiles l'un par rapport à l'autre, chaque élément comprenant un réseau de canaux destinés à une circulation de fluide et dont au moins certains débouchent sur leur face de contact, caractérisé en ce que, le réseau de canaux d'un des éléments dit d'échantillonnage comprenant au moins trois boucles d'échantillonnage indépendantes, chacune destinée à contenir un aliquote du fluide, la vanne d'échantillonnage disposant d'au moins autant de canaux de dispense de réactifs et de canaux de sortie des aliquotes que de boucles, l'autre élément dit de connexion est destiné à prendre au moins trois positions fonctionnelles distinctes relativement à l'élément d'échantillonnage :
- une première position permettant de relier une entrée de fluide dans la vanne à un premier circuit d'échantillonnage comprenant une pluralité de boucle d'échantillonnage alors reliées entre elles par des canaux du réseau de canaux de l'élément de connexion alors alignés spécifiquement avec chaque boucle, cette première position permettant également de relier, par un ou des canaux du réseau de canaux de l'élément de connexion, au moins une boucle d'un deuxième circuit d'échantillonnage, comprenant au moins une boucle d'échantillonnage, à un canal de dispense de réactif et à un canal de sortie d'aliquote,
- une deuxième position permettant de relier l'entrée de fluide au deuxième circuit d'échantillonnage, et au moins
- une troisième position où au moins une des boucles d'échantillonnage du premier circuit est reliée, par des canaux du réseau de canaux de l'élément de connexion, à un canal de dispense de réactif et à un canal de sortie de l'aliquote.

Ici, il faut entendre l'élément matériel désigné par les termes « circuit d'échantillonnage » comme pouvant inclure une ou plusieurs boucles d'échantillonnage où, dès lors qu'au moins deux boucles d'échantillonnage sont incluses dans le circuit, ces boucles sont reliées entre elles par un alignement des boucles avec le réseau de canaux de l'élément de connexion dès lors que l'entrée du fluide est reliée avec ledit circuit d'échantillonnage.

La vanne d'échantillonnage proposée permet de prélever différentes aliquotes puis de les distribuer en plusieurs temps, permettant de libérer le tube de prélèvement le plus vite possible. En outre, elle présente l'avantage de permettre d'isoler les aliquotes de sang et les réactifs, afin d'éviter les contaminations.

Avec la vanne d'échantillonnage selon l'invention, les aliquotes présentes dans la vanne peuvent être envoyées sur un même canal de mesures, les unes après les autres, ou sur plusieurs canaux de mesures différents. L'utilisation de la vanne d'échantillonnage selon l'invention permet ainsi d'échantillonner le prélèvement de départ en plusieurs aliquotes de volumes prédéterminés pour les distribuer simultanément ou non dans les bacs du système analytique, ce qui est très pratique. La vanne selon l'invention permettant aussi une injection différée dans le temps, il est possible de rendre une injection dépendante des résultats d'analyse des premières aliquotes analysées.

Une cadence très élevée, réalisant cependant plusieurs analyses différentes, peut alors être atteinte. En particulier, l'utilisation de deux circuits d'échantillonnage regroupant chacun plusieurs boucles d'échantillonnage permet d'effectuer certaines opérations sur un des circuits d'échantillonnage, pendant que l'on effectue d'autres opérations sur le second circuit d'échantillonnage. En effet, là où les arts antérieurs proposaient deux positions, l'invention en propose au moins trois ayant chacune une fonction utile et originale.

Ces trois positions permettent d'accéder de manière différée à deux circuits d'échantillonnage distincts pour les remplir et pour dispenser les boucles qui les constituent en réactifs.

L'invention permet ainsi de rincer le premier circuit d'échantillonnage alors que l'on est en train de dispenser le second circuit d'échantillonnage avec un réactif. L'invention permet ainsi de ne pas utiliser systématiquement le deuxième circuit d'échantillonnage ou le premier circuit d'échantillonnage, et, ainsi, de conserver l'isolation des boucles d'échantillonnage du circuit d'échantillonnage non utilisé d'avec les réactifs. Cela permet d'économiser les réactifs si on ne veut faire que l(es) analyse(s) d'un des circuits. Le dispositif permet donc de ne consommer que la quantité de réactifs strictement nécessaires à l'analyse effectuée.

Aussi, le fait d'utiliser une position commune pour deux fonctions distinctes sur le premier circuit d'échantillonnage et le deuxième circuit d'échantillonnage permet de gagner du temps dans le processus d'analyse.

On remarque ici que les tailles des boucles peuvent être identiques ou différentes. Il est ainsi possible de faire varier la dilution en utilisant des vannes avec des boucles de longueurs variables en fonction des besoins. Il reste également toujours possible de modifier les dilutions en modifiant le volume de réactif.

Dans une première mise en oeuvre de l'invention, dans la troisième position, toutes les boucles du premier circuit sont chacune reliées, par des canaux du réseau de canaux de l'élément de connexion, à un canal de dispense de réactif et à un canal de sortie de l'aliquote.

Cette mise en oeuvre permet de dispenser toutes les boucles du premier circuit d'échantillonnage en parallèle ce qui contribue à réduire drastiquement les durées d'analyse. Néanmoins cela présente le désavantage de mettre en contact le réactif avec l'aliquote même si l'analyse d'une boucle d'échantillonnage particulière n'est pas effectuée. Cette réalisation est particulièrement adaptée lorsque toutes les analyses du premier circuit d'échantillonnage sont, de toute façon, effectuées à coup sur. Les analyses non systématiquement effectuées étant réalisées à l'aide du second circuit d'échantillonnage qui peut éventuellement être constitué de plusieurs boucles dont au moins une d'entre elles, sinon partie ou toutes d'entre elles, est dispensable dans la première position.

Dans une seconde mise en oeuvre de l'invention, l'élément dit de connexion est destiné à prendre une troisième position telle qu'une partie seulement des boucles d'échantillonnage du premier circuit sont chacune reliées, par des canaux du réseau de canaux de l'élément de connexion, à un canal de dispense de réactif et à un canal de sortie de l'aliquote, et à prendre au moins une autre position fonctionnelle telle qu'au moins une autre partie distincte des boucles d'échantillonnage du premier circuit sont chacune reliées, par des canaux du réseau de canaux de l'élément de connexion, à un canal de dispense de réactif et à un canal de sortie de l'aliquote.

Lorsqu'au moins une des parties des boucles d'échantillonnage comprend une pluralité de boucle, cette réalisation permet de ne pas polluer les réactifs lors de la dispense de plusieurs boucles du premier circuit tout en garantissant de pouvoir faire plusieurs analyses simultanément.

Les parties des boucles d'échantillonnage peuvent être chacune constituées d'une paire de boucle d'échantillonnage. Elles peuvent aussi être chacune constituées d'une seule boucle d'échantillonnage.

Dans le dernier cas, on perd l'avantage de pouvoir dispenser plusieurs boucles du premier circuit en même temps mais on permet une dissociation totale des dispenses. Néanmoins, dans cette mise en oeuvre, l'invention permet toujours que le remplissage du premier circuit soit réalisé en même temps que la dispense d'une boucle du second circuit est réalisée. Il existe donc toujours un gain de temps.

Dans un premier mode de réalisation préférentiel, particulièrement avantageux, l'élément de connexion est également un élément de dispense portant les canaux de dispense de réactifs et les canaux de sortie des aliquotes de la vanne d'échantillonnage.

Dans un second mode de réalisation préférentiel, l'élément d'échantillonnage est également un élément de dispense portant les canaux de dispense de réactifs et les canaux de sortie des aliquotes de la vanne d'échantillonnage.

La vanne d'échantillonnage multi-position intègre alors toutes ses fonctions sur seulement deux éléments matériels. Elle contient moins d'éléments que les vannes d'échantillonnage de l'art antérieur tout en permettant de réaliser plus de fonctions. Elle sera en outre plus facile à démonter pour l'entretien, globalement moins sujette à l'usure et moins chère à usiner. Enfin, la vanne étant plus simple de réalisation, les risques de fuite entre les pièces sont réduits.

Enfin, selon ces modes de réalisation préférentiels, la construction de la vanne est très simplifiée puisque l'élément de connexion (ou d'échantillonnage) porte à la fois les canaux de connexion (ou les boucles d'échantillonnage) et les canaux de dispense.

Dans un mode de réalisation avantageux, les éléments sont des disques mobiles en rotation l'un par rapport à l'autre.

Une telle réalisation permet une construction de la vanne compacte, le mouvement de rotation étant plus particulièrement adapté pour assurer l'alignement des canaux portés par les différents éléments.

Préférentiellement, l'élément de connexion porte un canal constituant l'entrée de fluide dans la vanne.

Cette caractéristique permet de rendre particulièrement simple la réalisation de la vanne d'échantillonnage selon l'invention et assure la compacité de l'ensemble, en même temps qu'une réalisation très simple de la vanne avec deux éléments. Cela assure également une bonne accessibilité de l'entrée de la vanne.

Néanmoins, l'entrée peut aussi être un canal porté par l'élément d'échantillonnage et relié au besoin aux circuits d'échantillonnage par l'intermédiaire de l'élément de connexion.

Dans une application avantageuse de l'invention, le fluide étant un fluide biologique, le premier circuit est dédié aux analyses systématiques et le second circuit aux analyses non systématiques

Alors que les vannes d'échantillonnage de l'art antérieur devaient prévoir autant de boucles d'échantillonnage que d'analyses systématiques et d'analyses non systématiques supportées par la même vanne d'échantillonnage, ces boucles d'échantillonnage étant toutes dispensées pour une même position de la vanne, l'invention propose de pouvoir dispenser ses deux circuits d'échantillonnage indépendamment. Le premier circuit comprend alors avantageusement les boucles d'échantillonnage destinées aux analyses de routine systématiques et le second circuit comprend les boucles d'échantillonnage destinées aux analyses de routine non systématiques.

Comme l'invention permet de dispenser de manière différée ces deux circuits, on évite la contamination des réactifs pour les analyses particulières, même lorsque sont réalisées toutes les analyses de routine.

Une cadence très élevée est alors autorisée puisque l'on peut éviter la dispense d'une ou plusieurs boucles sans nécessiter un nettoyage de la boucle à cause d'une contamination éventuelle des réactifs. Cet avantage vient s'ajouter au fait que l'on peut réaliser deux opérations distinctes sur le premier et sur le second circuit d'échantillonnage dans une même position de la vanne.

L'invention concerne également un appareil d'analyse utilisant cette vanne d'échantillonnage, ainsi qu'un procédé d'échantillonnage d'un fluide mis en oeuvre dans un appareil d'analyse selon l'invention et utilisant une vanne d'échantillonnage selon l'invention.

Un tel procédé comprend les étapes suivantes :
- mise en première position,
- remplissage du premier circuit d'échantillonnage par aspiration du fluide placé dans le récipient de prélèvement vers l'entrée de la vanne,
- mise en deuxième position,
- remplissage du deuxième circuit d'échantillonnage par aspiration du fluide placé dans le récipient de prélèvement vers l'entrée de la vanne,
- mise en troisième position,
- dispense de réactifs sur au moins une boucle du premier circuit d'échantillonnage vers un ou plusieurs moyens d'analyse,
- mise en première position,
- dispense de réactifs sur au moins la boucle du deuxième circuit d'échantillonnage vers un ou plusieurs moyens d'analyse,
- rinçage du premier circuit d'échantillonnage par aspiration d'un fluide de rinçage placé dans un récipient dit de rinçage, cette étape pouvant être réalisée avant, après ou simultanément avec la précédente,
- mise en deuxième position,
- rinçage du deuxième circuit d'échantillonnage par aspiration d'un fluide de rinçage placé dans un récipient dit de rinçage.

### Brève description des dessins

D'autres caractéristiques et avantages de la présente invention ressortiront mieux à la lecture de la description qui va suivre, faite de manière illustrative et non limitative, en référence aux dessins annexés sur lesquels :
les figures 1A et 1B représentent des vues en perspective d'une vanne d'échantillonnage selon un mode de réalisation préférentiel de l'invention ;
les figures 2A et 2B sont, respectivement une représentation schématique de la vanne d'échantillonnage multi-positions selon l'invention permettant d'expliciter son fonctionnement et un agrandissement de l'élément de connexion tel que schématisé sur la figure 2A ;
les figures 3A à 3E illustrent le fonctionnement de la vanne d'échantillonnage multi-positions selon une mise en oeuvre préférentielle de l'invention avec la représentation schématique des figures 2A et 2B ;
les figures 4A à 4E illustrent le fonctionnement d'une vanne selon une mise en oeuvre particulière de l'invention avec la représentation schématique des figures 2A et 2B ;
les figures 5A à 5H illustrent le fonctionnement d'une vanne selon une autre mise en oeuvre particulière de l'invention utilisant encore la représentation schématique des figures 2A et 2B ;
la figure 6 est une vue en perspective éclatée de la vanne d'échantillonnage telle que représentée sur les figures 1A et 1B ;
les figures 7A et 7B sont deux vues en perspective d'une variante de l'invention.

### Description détaillée d'un mode de réalisation

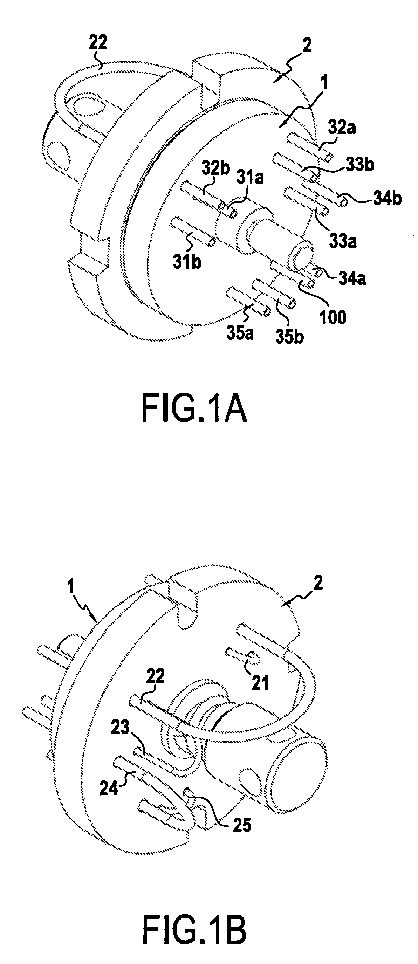

Les figures 1A et 1B présentent, en perspective, un mode de réalisation préférentiel d'une vanne d'échantillonnage selon l'invention. Cette vanne est constituée d'un élément de connexion 1 et d'un élément d'échantillonnage 2. Ces deux éléments 1 et 2 sont deux disques au contact l'un avec l'autre sur deux faces respectives 10 et 20. L'élément de connexion 1 est articulé en rotation par rapport à l'élément d'échantillonnage 2, cette rotation étant schématiquement représentée par une double flèche.

Dans le mode de réalisation préférentielle de la figure 1, l'élément de connexion 1 comprend une entrée 100 du fluide à analyser. Lors du fonctionnement de la vanne, cette entrée 100 de la vanne d'échantillonnage est reliée à un tube de prélèvement par des moyens adéquats. Avantageusement, l'entrée 100 n'est pas reliée à un tube, mais est connectée à une aiguille qui a son propre mode d'insertion appelé percuteur. Ce percuteur permet de relier l'entrée 100 au tube de prélèvement. Dans ce mode de réalisation, l'élément de connexion 1 comprend en outre des canaux de dispense et d'évacuation de réactifs 31a, 31b, 32a, 32b, 33a, 33b, 34a, 34b, 35a, 35b.

L'élément d'échantillonnage 2 présente un certain nombre de boucles d'échantillonnage 21, 22, 23, 24 et 25 et une sortie 200 de fluide, non visible sur les figures 1A et 1B.

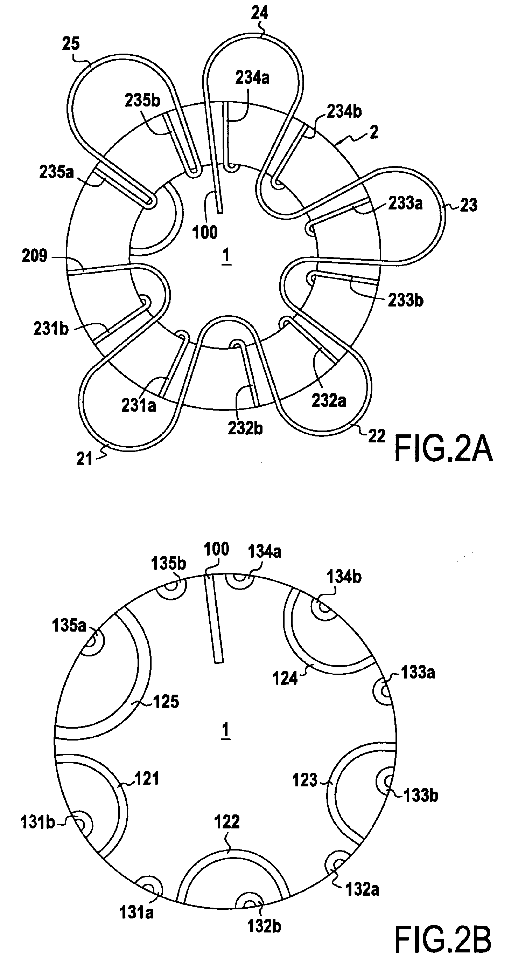

La vanne d'échantillonnage selon le mode de réalisation préférentiel des figures 1A et 1B est également représentée schématiquement sur les figures 2A et 2B. Cette représentation schématique facilite la compréhension du fonctionnement de la vanne d'échantillonnage.

Pour cela, les canaux des deux éléments de connexion 1 et d'échantillonnage 2 sont représentés sur une même surface plane.

L'élément de connexion 1 est alors représenté sous la forme d'un disque central alors que l'élément d'échantillonnage 2 est représenté sous la forme d'un anneau entourant le disque central, élément de connexion 1, qui est mobile en rotation par rapport à l'anneau, élément d'échantillonnage 2.

L'élément de connexion 1 est destiné à mettre en relation certains canaux de l'élément d'échantillonnage 2 entre eux. Ces mises en relation sont présentées selon une mise en oeuvre préférentielle de l'invention.

La figure 2B présente l'élément de connexion 1, seul, dans la représentation schématique de la figure 2A. Il inclut l'entrée 100 ainsi que des canaux 121, 122, 123, 124, 125 destinés à mettre en relation hydraulique certains canaux de l'élément d'échantillonnage.

L'anneau, élément d'échantillonnage 2, porte les boucles d'échantillonnage 21, 22, 23, 24 et 25. Pour des besoins de simplification de la représentation, les canaux de dispense et d'évacuation de réactifs 31a, 31b, 32a, 32b, 33a, 33b, 34a, 34b, 35a, 35b ont été schématiquement répartis sur les deux éléments 1 et 2 alors que, selon le mode de réalisation préférentiel de la figure 1, ils sont portés uniquement par l'élément de connexion 1.

Chaque canal 3Xa ou 3Xb avec X=1 à 5 sont alors représentés sur les figures 2A et 2B par deux canaux 13Xa et 23Xb portés respectivement par l'élément de connexion 1 et l'élément d'échantillonnage 2. Ces deux canaux 13Xa et 23Xb sont tels qu'ils sont alignés entre eux et alignés avec une boucle d'échantillonnage 2X lorsque la vanne est en position de dispense sur une ou plusieurs boucles d'échantillonnage comme on va le voir dans la suite.

On fait ici la remarque que ces canaux de dispense et d'évacuation, portés par l'élément de connexion 1 sur la figure 1, peuvent également être avantageusement portés par l'élément d'échantillonnage 2 selon un autre mode de réalisation de l'invention. On conserve encore, dans un tel mode de réalisation, l'avantage de n'avoir que deux éléments mobiles l'un par rapport à l'autre.

Dans le mode de réalisation préférentiel de la figure 1 schématisé sur la figure 2, la vanne d'échantillonnage porte deux circuits d'échantillonnage distincts. Le premier circuit d'échantillonnage est constitué par les boucles 21, 22, 23 et 24 alors que le deuxième circuit d'échantillonnage comprend uniquement la boucle 25.

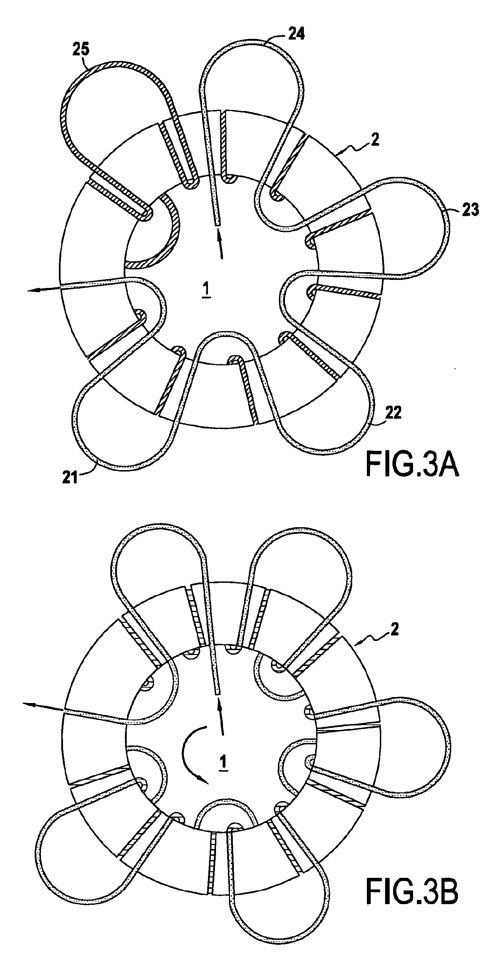

Les figures 3A à 3E illustrent le fonctionnement de la vanne d'échantillonnage. La vanne d'échantillonnage est dans une première position sur la figure 3A, correspondant à la position représentée sur la figure 2.

Dans cette première position, la boucle 24 est reliée à l'entrée 100 de la vanne, la boucle 24 est reliée à la boucle 23, elle-même reliée à la boucle 22, elle-même reliée à la boucle 21, elle-même reliée à la sortie 200 portée par l'élément d'échantillonnage 2. Plus particulièrement, dans cette première position, la boucle 24 et la boucle 23 sont reliées par l'intermédiaire du canal 124 de l'élément de connexion 1. La boucle 23 est reliée à la boucle 22 par l'intermédiaire du canal 123 de l'élément de connexion 1, la boucle d'échantillonnage 22 est reliée à la boucle 21 par l'intermédiaire du canal 122 de l'élément de connexion 1 et, enfin, la boucle 21 est ensuite reliée à la sortie 200 de la vanne d'échantillonnage par la boucle 121 de l'élément de connexion.

On constate, en parallèle, que la boucle 25 est alors reliée à deux canaux, un de dispense et un d'évacuation de l'aliquote, constitués par les canaux 135a, 135b et 235a et 235b des figures 2A et 2B.

On comprend bien que la disposition des canaux sur l'élément de connexion 1 répond précisément à la fonction de l'invention de pouvoir relier un premier circuit d'échantillonnage à une entrée de fluide alors même qu'un deuxième circuit d'échantillonnage est relié, quant à lui, à des éléments de dispense de réactif et d'évacuation de l'aliquote.

Sur la figure 3A, le premier circuit d'échantillonnage est rempli avec un fluide à analyser prélevé et aspiré dans la vanne par l'entrée 100. Ce sang est représenté par des points. Les autres canaux de la figure 3A sont remplis avec un autre fluide, par exemple un fluide de rinçage, représentée par des hachures.

La figure 3B représente la vanne d'échantillonnage dans une deuxième position selon laquelle, l'entrée 100 de la vanne d'échantillonnage, est alignée avec la boucle 25 constituant, dans l'exemple de réalisation préférentiel de la figure 1, le deuxième circuit d'échantillonnage. La boucle 25 est alors également reliée à la sortie 200 par l'intermédiaire d'un canal 125 de l'élément de connexion 1. Cette deuxième position permet de remplir le deuxième circuit d'échantillonnage avec le sang aspiré au niveau de l'entrée 100.

On remarque ici que le deuxième circuit pourrait très bien comprendre plusieurs boucles d'échantillonnage à la seule condition de condenser la répartition des boucles sur l'élément d'échantillonnage 2 et à munir l'élément de connexion de canaux aptes à connecter les différentes boucles entre elles comme cela est réalisé entre les quatre boucles du premier circuit d'échantillonnage.

Pendant ce temps, les aliquotes présents dans chaque boucle du premier circuit d'échantillonnage sont isolés les uns des autres et sont isolés des canaux de dispense et d'évacuation de l'aliquote où peuvent se trouver des réactifs.

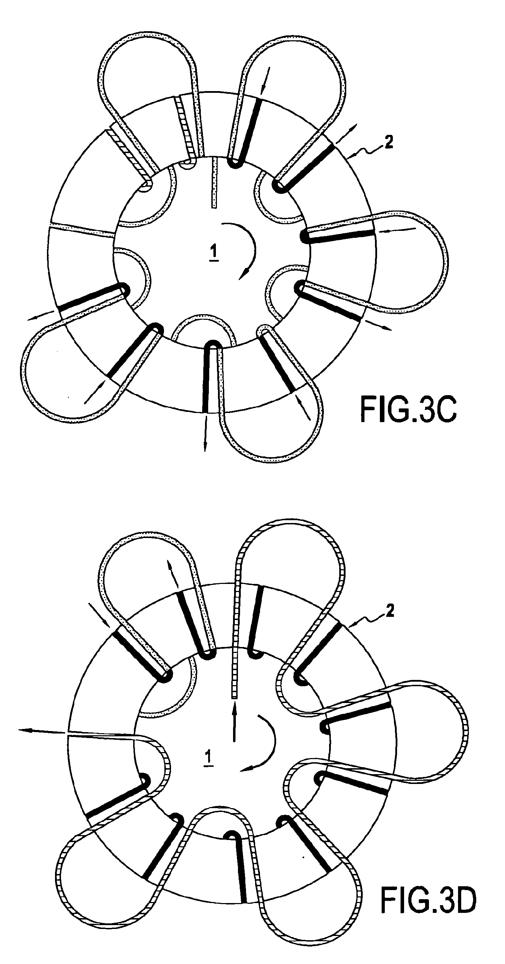

Sur la figure 3C, l'élément de connexion prend une troisième position selon laquelle l'entrée 100 est isolée de toutes les boucles d'échantillonnage de la vanne. A ce moment là, le tube de prélèvement peut être libéré. On verra par la suite qu'il pourrait aussi être retiré préalablement dans une variante de réalisation.

On constate que, dans la troisième position, la boucle 25 du deuxième circuit d'échantillonnage est isolée de tout canal. Ainsi, elle ne risque pas d'être contaminée.

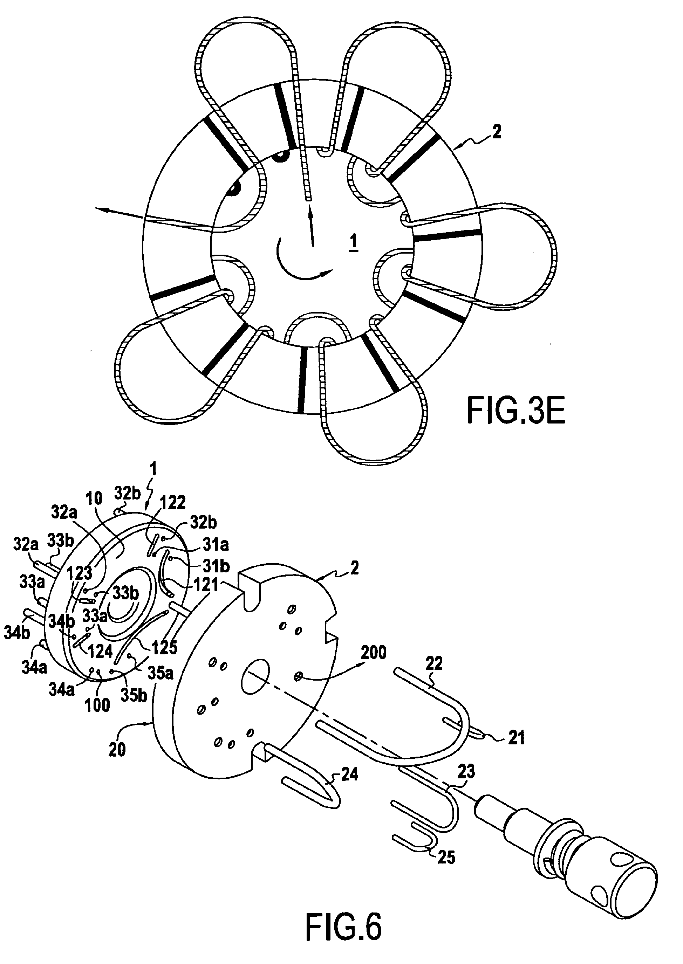

En revanche, selon la mise en oeuvre préférentielle présentée sur la figure 3, chacune des boucles 21, 22, 23 et 24 du premier circuit d'échantillonnage est connectée à un circuit de dispense de réactif et à un circuit d'évacuation de l'aliquote qui lui est propre.

Ainsi, la boucle d'échantillonnage 21 est reliée, d'un côté, à un canal de dispense de réactif constitué par les canaux 131a de l'élément de connexion 1 et 231a de l'élément d'échantillonnage 2, alors que l'autre côté de la boucle d'échantillonnage est connecté à un canal d'évacuation de l'aliquote constitué par les canaux 131b porté par l'élément de connexion 1 et 231b porté par l'élément d'échantillonnage 2.

De même, la boucle d'échantillonnage 22 est reliée, d'un côté, à un canal de dispense de réactif constitué par les canaux 132a de l'élément de connexion 1 et 232a de l'élément d'échantillonnage 2, alors que l'autre côté de la boucle d'échantillonnage est connecté à un canal d'évacuation de l'aliquote constitué par les canaux 132b porté par l'élément de connexion 1 et 232b porté par l'élément d'échantillonnage 2.

Il en est respectivement de même pour les boucles de réaction 23 et 24 mises en relation avec les canaux de dispense de réactif constitués respectivement par les canaux 133a, 233a et 134a, 234a et d'évacuation d'aliquote constitués par les canaux 133b,233b et 134b,234b.

Dans cette troisième position, une dispense de réactif est alors réalisée dans chacune des boucles 21, 22, 23 et 24. Les aliquotes de sang mélangées au réactif sont classiquement récupérées dans un ou plusieurs appareil(s) d'analyse non représenté(s). Ce ou ces appareils permettent d'effectuer des analyses simultanées ou séquentielles, identiques, partiellement distinctes ou totalement distinctes.

Ainsi, pour un même fluide, jusqu'à quatre types d'analyses pourront être réalisées simultanément dans un ou plusieurs appareil(s) d'analyses apte(s) à les mettre en oeuvre.

Il est également possible d'envisager que les aliquotes soient envoyées séquentiellement vers un même dispositif d'analyse, chaque boucle étant dispensée avec un réactif distinct et visant à évaluer un paramètre particulier pouvant être mesuré par des moyens d'analyses identiques.

Généralement, il est nécessaire de respecter un temps de pause de quelques secondes, par exemple 30 secondes, une fois que les réactifs sont dispensés afin de respecter la cinétique de réaction dans les aliquotes. On constate qu'avantageusement, dans cette troisième position, il ne peut y avoir de contamination entre un réactif et un quelconque aliquote de sang, ici celui de la boucle 25 en l'occurrence.

Pendant la pause, comme représenté sur la figure 3D, l'élément de connexion 1 peut avantageusement être mobilisé afin de revenir dans la première position. Comme les boucles 21 à 24 sont alors reliées entre elles, cela va permettre de nettoyer les boucles du premier circuit d'échantillonnage 21, 22, 23 et 24 en y envoyant du liquide de rinçage.

En même temps, comme la boucle 25 est alors reliée à des canaux de dispense et d'évacuation, la première position permet de dispenser la dernière aliquote contenue dans la boucle 25 vers des moyens de récupération et/ou d'analyses adéquats qui peuvent être différents des moyens d'analyse utilisés pour une ou plusieurs boucles du premier circuit ou non.

Le nettoyage des boucles 21 à 24 et la dispense de la boucle 25 se font ainsi de manière simultanée, ce qui permet un gain de temps considérable. Plus généralement, avec l'invention, puisque certaines fonctions distinctes sont réalisées de manière simultanée pour un premier circuit et un deuxième circuit, ce type de travail en temps masqué permet un gain de temps très important pour l'analyse.

On constate que dans la mise en oeuvre de l'invention proposée ici, le second circuit ne comprend qu'une boucle d'échantillonnage ce qui, actuellement, est le plus adapté pour les applications d'analyse sanguine. Néanmoins, le second circuit peut comprendre plusieurs boucles d'échantillonnage. Dans ce cas, au moins une d'entre elles est dispensable dans la première position au sens de l'invention, c'est-à-dire en même temps que le premier circuit est relié à l'entrée de fluide. Les autres boucles du second circuit pourront être dispensables dans la même, dite, première position ou dans des positions distinctes de la première position.

Dans des mises en oeuvre particulières de l'invention, ces autres positions relatives des éléments de connexion et d'échantillonnage permettant la dispense d'une ou plusieurs boucles du second circuit pourront éventuellement également permettre une dispense simultanée d'une ou plusieurs boucle(s) du premier circuit.

Enfin, sur la figure 3E, à l'aide du moteur qui fait tourner l'élément de connexion 1, ce dernier revient dans la deuxième position, ce qui permet le nettoyage de la cinquième boucle 25 avec le même liquide rinçage que pour les quatre premières boucles ou à l'aide d'un liquide de rinçage différent.

L'invention permet en effet d'utiliser un liquide de rinçage différent pour les deux circuits d'échantillonnage. Cela est particulièrement avantageux lorsque la nature d'un réactif particulier, par exemple utilisé sur la boucle 25, entraîne la nécessité de nettoyer avec un liquide de rinçage distinct de celui utilisé pour les quatre premières boucles 21 à 24.

A la fin du cycle des cinq étapes représentées sur les figures 3A à 3E, il a ainsi été possible de réaliser cinq analyses différentes à partir du même échantillon de sang de départ prélevé en une seule fois dans le tube.

Les analyses ont pu être réalisées en deux phases afin que certaines puissent être effectuées de manière simultanée et d'autres, de manière différée.

Il est ainsi possible de réduire le temps d'utilisation du tube de prélèvement par la machine et, ainsi, d'augmenter les cadences tout en améliorant les performances grâce à des aliquotes isolées.

On remarque également que, dans la mesure où il est possible de réaliser des analyses différées, il est possible de conditionner la réalisation d'une analyse en fonction des résultats de certaines analyses précédemment réalisées.

En outre, le système de vanne d'échantillonnage selon l'invention permet de ne réaliser qu'une partie des analyses pouvant être accédées grâce à la vanne d'échantillonnage en ne se servant que d'une partie des circuits d'échantillonnage. On peut réaliser avec l'invention un prélèvement sur un seul des deux circuits d'échantillonnage pour obtenir une seule partie des analyses et ainsi ne prélever que la quantité de sang strictement utile.

Par exemple, il est possible de ne vouloir les résultats que de l'analyse de la cinquième boucle 25. En mettant alors la vanne dans la deuxième position, on autorise de ne remplir que cette boucle 25 qui est complètement séparée du reste de la vanne, et en particulier, du premier circuit d'échantillonnage. La dispense de la boucle 25 est ensuite réalisée par retour de la vanne d'échantillonnage dans la première position. Le rinçage de la boucle 25 se fait ensuite en revenant tout simplement à la deuxième position.

Cela est possible sans aucune modification ni de la vanne ni des positions que peut prendre la vanne. Pour ne réaliser qu'une unique analyse, il est donc judicieux de ne faire qu'un prélèvement dans la deuxième position directement sans passer par la première position.

Ainsi, le premier circuit d'échantillonnage n'aura pas été en contact ni avec l'échantillon de sang ni avec aucun réactif et il ne sera donc pas nécessaire de le nettoyer. Il est ainsi possible de réduire, de manière conséquente, les volumes de réactifs et de sang prélevé utilisé pour faire une seule analyse. On comprend que l'invention permet de réaliser au moins une analyse même si l'échantillon de sang n'est pas d'un très grand volume.

De manière identique, si l'on ne souhaite avoir les résultats que des analyses des quatre premières boucles, il ne sera pas nécessaire de remplir la cinquième boucle.

Dans le cas où l'on souhaite réaliser des analyses des quatre premières boucles, la vanne est d'abord mise en première position afin de réaliser le prélèvement des quatre aliquotes nécessaires avant de passer directement dans la troisième position qui permet de dispenser chacun de ces aliquotes vers les moyens de récupération et/ou d'analyse appropriés. Le retour dans la première position permet ensuite de procéder au nettoyage des boucles 21, 22, 23 et 24.

Ici, la boucle 25 n'aura pas été en contact avec l'échantillon de sang ni avec aucun réactif. Il ne sera donc pas nécessaire de nettoyer cette boucle, ce qui permet également, comme exposé ci-dessus des réductions de volume de réactif et des volumes de sang prélevés.

Des fractionnements différents du nombre de boucles du premier circuit d'échantillonnage quant à leurs possibilités de dispense sont envisagés selon l'invention.

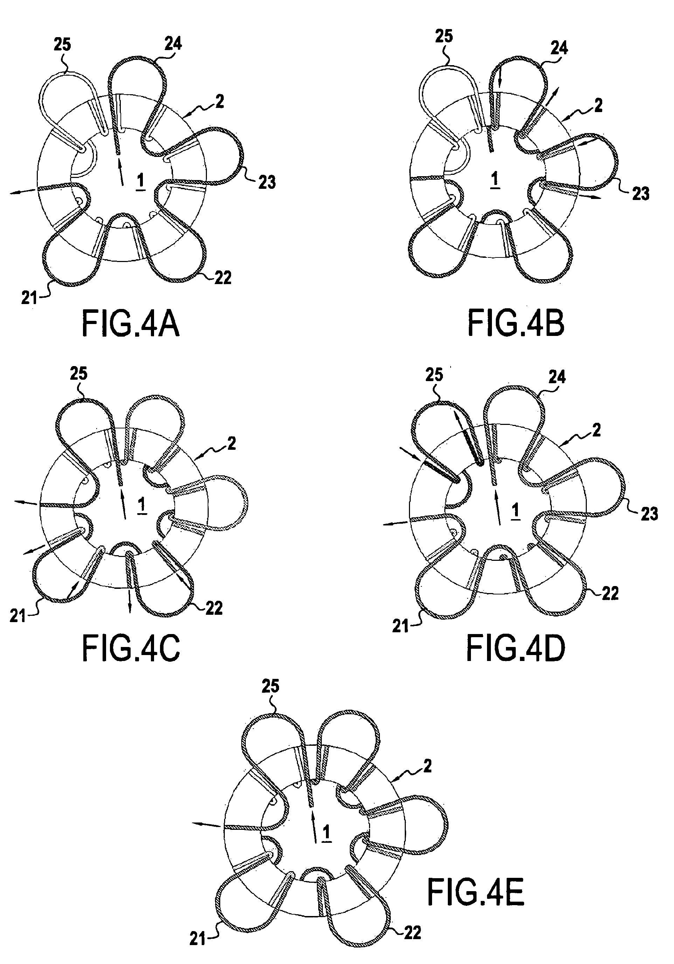

La figure 4 représente schématiquement une telle mise en oeuvre selon laquelle les boucles du premier circuit d'échantillonnage sont dispensables simultanément par paires. Une des positions de dispense est la deuxième position selon l'invention puisqu'elle permet en outre de remplir le second circuit d'échantillonnage.

Sur la figure 4A, la vanne est dans la première position où un premier circuit constitué des boucles 21, 22, 23 et 24 peut être rempli et où la boucle 25 peut être dispensée car reliée à un canal de dispense de réactif et à un canal de sortie de l'aliquote.

Sur la figure 4B, la vanne d'échantillonnage est dans une troisième position au sens de l'invention et les deux boucles 23 et 24 sont chacune reliées à un canal de dispense de réactif et à un canal de sortie de l'aliquote.

Sur la figure 4C, la vanne d'échantillonnage est dans une deuxième position au sens de l'invention, puisque, dans cette position, le second circuit constitué par la boucle 25 peut être rempli, en même temps que dans une troisième position au sens de l'invention, puisque les boucles 21 et 22 sont reliées chacune à un canal à un canal de dispense de réactif et à un canal de sortie de l'aliquote.

Cette position est une autre position fonctionnelle, une quatrième position fonctionnelle en l'occurrence, qui regroupe les fonctions des deuxièmes et troisièmes positions selon l'invention. La vanne d'échantillonnage obtenue, couverte par la portée de la première revendication, est plus particulièrement protégée par la revendication 4.

Sur la figure 4D, le premier circuit d'échantillonnage peut être rincé pendant que le second circuit, constitué par la boucle 25, peut être dispensé. Sur la figure 4E, la boucle 25 est rincée. Dans cette position, les boucles 21 et 22 sont reliées chacune à un canal de dispense de réactif et à un canal de sortie d'aliquote mais cela n'est pas gênant dans la mesure où les boucles 21 et 22 ont été rincées.

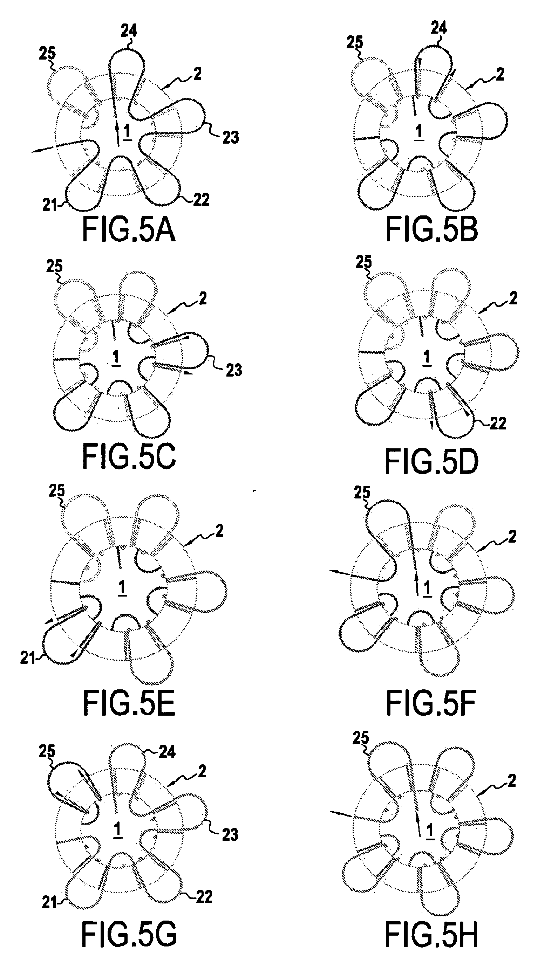

La figure 5 propose une autre mise en oeuvre avec encore un autre type de fractionnement du nombre de boucles du premier circuit d'échantillonnage quant à leurs possibilités de dispense.

Dans cette mise en oeuvre, les boucles 21, 22, 23, 24 du premier circuit d'échantillonnage sont remplies dans une même position représentée sur la figure 5A pour laquelle la boucle 25 du second circuit est reliée à un canal de dispense de réactif et à un canal de sortie de l'aliquote. Cette position est la première position au sens de l'invention.

Ensuite, les positions relatives des éléments de connexion et d'échantillonnage, distinctes, respectivement prises sur les figures 5B, 5C, 5D et 5E permettent de relier respectivement les boucles 24, 23, 22 et 21 avec un canal de dispense de réactif et un canal de sortie d'aliquote.

Une position distincte est ici prise pour chaque boucle. Il y a ici autant de « troisième position » au sens de l'invention que de boucles dans le premier circuit. Dans le cas où plusieurs boucles constitueraient le second circuit, certaines de ces positions pourraient permettre également de relier une des boucles du second circuit à un canal de dispense de réactif et à un canal de sortie de l'aliquote.

La figure 5F représente la deuxième position au sens de l'invention où la boucle 25 peut être remplie. Sur la figure 5G, la vanne est dans la même position que sur la figure 5A. Le premier circuit est alors rincé pendant que le second circuit est dispensé. Enfin, sur la figure 5H le second circuit est rincé dans la même position que sur la figure 5F qui permet de relier l'entrée de la vanne au second circuit.

La figure 6 est une vue en perspective éclatée de la vanne d'échantillonnage des figures 1A et 1B. On retrouve les cinq boucles 21 à 25. L'élément de connexion 1 de ce mode de réalisation préférentiel comprend les canaux de connexion 121 à 125 sous forme de canaux creusés sur la face 10. Leurs extrémités sont destinées à être alignées avec les orifices de deux des boucles 21 à 25 sur la face 20 de l'élément d'échantillonnage 2 lorsque la vanne est en première position. Les canaux 121 et 125 sont aptes à être connectés à la sortie 200, visible sur cette figure, alors que l'entrée 100 est apte à être connectée, soit directement à la boucle 24, soit à la boucle 25.

L'élément de connexion porte ici les canaux de dispense 3Xa et 3Xb pour chacune des boucles 21 à 25. Ces canaux 3Xa et 3Xb traversent l'élément de connexion 1 et se présentent, à l'extérieur, sous forme de tuyaux auxquels on peut venir connecter les arrivées de fluide, notamment des réactifs, et, à l'intérieur de la vanne, sur la face 10, sous forme d'orifices qui seront alignés avec les orifices de la boucle 2X sur la face 20 lorsque la vanne sera dans la troisième position.

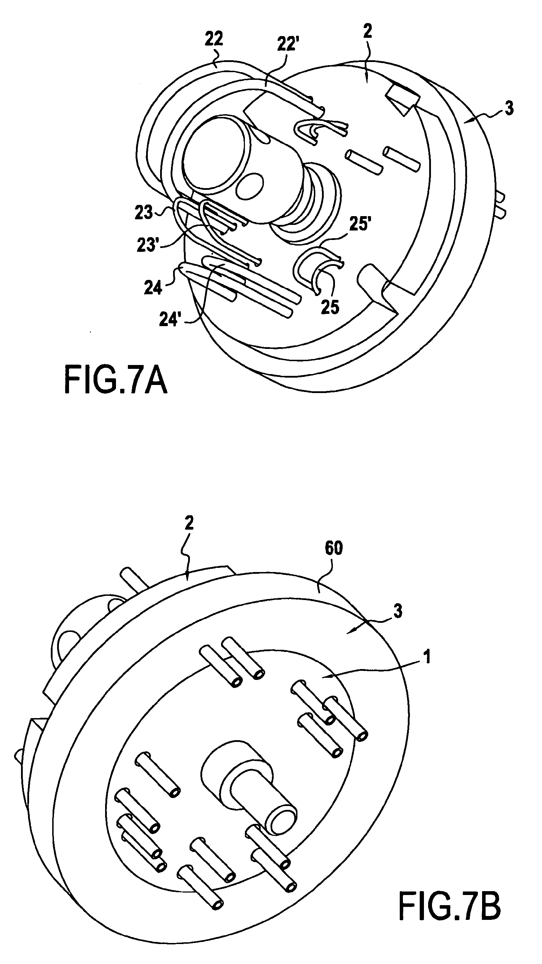

La figure 7 représente une variante de l'invention selon laquelle un élément additionnel 3 complète la vanne d'échantillonnage des figures précédentes et où le volume des boucles sur chaque circuit peut être modifié.

Sur la variante de la figure 7, chaque boucle 2X peut être doublée avec un doublon 2X'. Ces doublons permettent de modifier le volume des aliquotes. Chaque paire de boucles peut être reliée par un circuit interne à l'élément d'échantillonnage 2 ou par un circuit interne à l'élément de connexion 1 ou encore par un circuit précisément porté par l'élément additionnel 3.

Cette variante avec des boucles à volumes différents est réalisable avec au moins une position supplémentaire qui permet de relier à l'entrée 100 des boucles standard ou de volumes différents. On peut ainsi prévoir de pouvoir changer le volume de chaque boucle selon les besoins des analyses.

L'élément additionnel 3 peut précisément permettre de doubler le volume des boucles en prenant des positions distinctes. Sur la réalisation présentée sur la figure 7, on voit, sur la figure 7B, que l'élément de connexion 1 est entouré par l'élément additionnel 3 qui est un anneau autour de l'élément de connexion 1.

Cela permet de réaliser une vanne avec trois éléments mais avec seulement trois faces rectifiées, une sur l'élément d'échantillonnage 2, une sur l'élément de connexion 1 qui est en contact avec la face rectifiée de l'élément d'échantillonnage 2 et une dernière sur l'élément additionnel 3 qui, elle aussi, est en contact avec la face rectifiée de l'élément d'échantillonnage 2 à la manière présentée sur la figure 7.

La présence de l'élément additionnel 3 permet en particulier la commutation entre une position où le tube de prélèvement est accessible (« tube ouvert ») et une position où l'accès au tube de prélèvement est fermé (« tube fermé »).

Dans une variante de réalisation, en pratique indépendante de l'invention, il est possible de libérer encore plus rapidement le tube de prélèvement de sang dans la zone de prélèvement.

On peut en effet envisager que le sang soit prélevé dans le tube de prélèvement en une seule fois et que la quantité de sang nécessaire pour l'ensemble des analyses se trouve donc située juste après l'aiguille de prélèvement. Le tube peut alors être retiré de la zone de prélèvement.

Ensuite, on commute la vanne en première position afin de remplir les premières boucles avant de faire basculer la vanne en deuxième position pour remplir le deuxième circuit.

Cette mise en oeuvre revient à utiliser un réservoir, qui peut être un simple tube de trajet du fluide à analyser, entre l'aiguille de prélèvement et la vanne présentant un volume correspondant à l'ensemble du volume de sang utile au remplissage des cinq boucles d'échantillonnage.

Cette mise en oeuvre présente l'avantage de garder le tube de prélèvement très peu de temps à disposition et, ainsi, de le libérer pour d'autres analyses éventuelles réalisées au niveau d'autres vannes d'échantillonnage très rapidement, cela permet donc d'augmenter encore les cadences de l'appareil.

On remarque enfin que diverses mises en oeuvre peuvent être réalisées selon les principes de l'invention définis dans les revendications suivantes.

## Revendications

1. Vanne d'échantillonnage, à partir d'un même récipient de prélèvement, d'un fluide en vue de plusieurs analyses utilisant des réactifs, ladite vanne comprenant deux éléments en contact l'un avec l'autre sur une de leurs faces dite face de contact, ces deux éléments étant mobiles l'un par rapport à l'autre, chaque élément comprenant un réseau de canaux destinés à une circulation de fluide et dont au moins certains débouchent sur leur face de contact, **caractérisé en ce que**, le réseau de canaux d'un des éléments dit d'échantillonnage (2) comprenant au moins trois boucles d'échantillonnage indépendantes (21,22,23,24,25), chacune destinée à contenir un aliquote du fluide, la vanne d'échantillonnage disposant d'au moins autant de canaux de dispense de réactifs (31a,32a,33a,34a,35a) et de canaux de sortie des aliquotes (31b,32b,33b,34b,35b) que de boucles, l'autre élément dit de connexion (1) est destiné à prendre au moins trois positions fonctionnelles distinctes relativement à l'élément d'échantillonnage :
- une première position permettant de relier une entrée de fluide (100) dans la vanne à un premier circuit d'échantillonnage comprenant une pluralité de boucle d'échantillonnage (21,22,23,24) alors reliées entre elles par des canaux (121,122,123,124) du réseau de canaux de l'élément de connexion (1) alors alignés spécifiquement avec chaque boucle (21,22,23 ou 24), cette première position permettant également de relier, par un ou des canaux (135a,135b) du réseau de canaux de l'élément de connexion (1), au moins une boucle (25) d'un deuxième circuit d'échantillonnage comprenant au moins une boucle d'échantillonnage (25) à un canal de dispense de réactif (235a) et à un canal de sortie d'aliquote (235b),
- une deuxième position permettant de relier l'entrée de fluide (100) au deuxième circuit d'échantillonnage (25),
- une troisième position où au moins une boucle d'échantillonnage (21,22,23 ou 24) du premier circuit est reliée, par des canaux (131a,131b, 132a,132b, 133a,133b ou 134a,134b) du réseau de canaux de l'élément de connexion (1), à un canal de dispense de réactif (231a, 232a,233a ou 234a) et à un canal de sortie de l'aliquote (231b, 232b,233b ou 234b).

2. Vanne d'échantillonnage selon la revendication 1, **caractérisée en ce que**, dans la troisième position, toutes les boucles (21,22,23,24) du premier circuit sont chacune reliées, par des canaux (131a,131b,132a,132b,133a,133b,134a,134b) du réseau de canaux de l'élément de connexion (1), à un canal de dispense de réactif (231a, 232a,233a ou 234a) et à un canal de sortie de l'aliquote (231b, 232b,233b ou 234b).

3. Vanne d'échantillonnage selon la revendication 1, **caractérisée en ce que** l'élément dit de connexion (1) est destiné à prendre une troisième position telle qu'une partie (23,24) seulement des boucles d'échantillonnage du premier circuit sont chacune reliées, par des canaux du réseau de canaux de l'élément de connexion (1), à un canal de dispense de réactif et à un canal de sortie de l'aliquote, et à prendre au moins une autre position fonctionnelle telle qu'au moins une autre partie (21,22) distincte des boucles d'échantillonnage du premier circuit sont chacune reliées, par des canaux du réseau de canaux de l'élément de connexion (1), à un canal de dispense de réactif et à un canal de sortie de l'aliquote.

4. Vanne d'échantillonnage selon l'une des revendications 3, **caractérisée en ce que** la deuxième position permettant de relier l'entrée de fluide (100) au deuxième circuit d'échantillonnage est aussi une autre position fonctionnelle telle qu'au moins une autre partie (21,22) des boucles d'échantillonnage du premier circuit sont chacune reliées, par des canaux du réseau de canaux de l'élément de connexion (1), à un canal de dispense de réactif et à un canal de sortie de l'aliquote.

5. Vanne d'échantillonnage selon la revendication 3, **caractérisée en ce que** les parties des boucles d'échantillonnage sont chacune constituées d'une paire (21,22 et 23,24) de boucle d'échantillonnage.

6. Vanne d'échantillonnage selon la revendication 3, **caractérisée en ce que** les parties des boucles d'échantillonnage sont chacune constituées d'une seule boucle d'échantillonnage.

7. Vanne d'échantillonnage selon la revendication 1, **caractérisée en ce que** l'élément de connexion (1) est également un élément de dispense portant les canaux de dispense de réactifs et les canaux de sortie des aliquotes de la vanne d'échantillonnage.

8. Vanne d'échantillonnage selon la revendication 1, **caractérisée en ce que** l'élément d'échantillonnage (2) est également un élément de dispense portant les canaux de dispense de réactifs et les canaux de sortie des aliquotes de la vanne d'échantillonnage.

9. Vanne d'échantillonnage selon la revendication 1, **caractérisée en ce que** les éléments (1,2) sont des disques mobiles en rotation l'un par rapport à l'autre.

10. Vanne d'échantillonnage selon la revendication 1, **caractérisée en ce que** l'élément de connexion (1) porte un canal constituant l'entrée de fluide dans la vanne.

11. Vanne d'échantillonnage selon la revendication 1, **caractérisée en ce que** l'élément d'échantillonnage (2) porte un canal constituant l'entrée de fluide dans la vanne.

12. Vanne d'échantillonnage selon la revendication 1, **caractérisée en ce que**, le fluide étant un fluide biologique, le premier circuit est dédié aux analyses de routine et le second circuit aux analyses particulières.

13. Appareil d'analyse de fluide comprenant au moins une vanne d'échantillonnage selon l'une des revendications précédentes.

14. Procédé d'échantillonnage d'un fluide utilisant une vanne d'échantillonnage selon l'une des revendications 1 à 12 et mis en oeuvre dans un appareil d'analyse selon la revendication 13, **caractérisé en ce qu'**il comprend les étapes suivantes :
- mise en première position,
- remplissage du premier circuit d'échantillonnage par aspiration du fluide placé dans le récipient de prélèvement vers l'entrée de la vanne,
- mise en deuxième position,
- remplissage du deuxième circuit d'échantillonnage par aspiration du fluide placé dans le récipient de prélèvement vers l'entrée de la vanne,
- mise en troisième position,
- dispense de réactifs sur au moins une boucle du premier circuit d'échantillonnage vers un ou plusieurs moyens d'analyse,
- mise en première position,
- dispense de réactifs sur au moins la boucle du deuxième circuit d'échantillonnage vers un ou plusieurs moyens d'analyse,
- rinçage du premier circuit d'échantillonnage par aspiration d'un fluide de rinçage placé dans un récipient dit de rinçage, cette étape pouvant être réalisée avant, après ou simultanément avec la précédente,
- mise en deuxième position,
- rinçage du deuxième circuit d'échantillonnage par aspiration d'un fluide de rinçage placé dans un récipient dit de rinçage.

## Claims

1. A sampling valve for taking a fluid for a plurality of analyses using reagents from a single collecting vessel, said valve comprising two members in contact with each other via respective ones of their faces referred to as "contact" faces, the two members being movable relative to each other, each member having a network of fluid-flow channels, at least some of which open out into the contact face thereof, the valve being **characterized in that** the network of channels of one of said members, referred to as a so-called sampling member (2), comprises at least three independent sampling loops (21, 22, 23, 24, 25), each suitable for containing an aliquot of the fluid, the sampling valve having at least as many reagent-dispenser channels (31a, 32a, 33a, 34a, 35a) and aliquot-outlet channels (31b, 32b, 33b, 34b, 35b) as it has loops, the other member, referred to as a so-called connection member (1), being capable of taking at least three distinct functional positions relative to the sampling member:
• a first position enabling a fluid inlet (100) into the valve to be connected to a first sampling circuit comprising a plurality of sampling loops (21, 22, 23, 24) that are then connected to one another via channels (121, 122, 123, 124) of the network of channels of the connection member (1) that are then specifically in alignment with each of the loops (21, 22, 23, or 24), said first position also serving to connect, via one or more channels (135a, 135b) of the network of channels of the connection member (1), at least one loop (25) of a second sampling circuit, having at least one sampling loop (25), to a reagent-dispenser channel (235a) and to an aliquot-outlet channel (235b);
• a second position enabling the fluid inlet (100) to be connected to the second sampling circuit (25); and
• a third position in which at least one sampling loop (21, 22, 23, or 24) of the first circuit is connected via channels (131a & 131b, 132a & 132b, 133a & 133b, or 134a & 134b) of the network of channels of the connection member (1) to a reagent-dispenser channel (231a, 232a, 233a, or 234a) and to an aliquot-outlet channel (231b, 232b, 233b, or 234b).

2. A sampling valve according to claim 1, **characterized in that**, in the third position, all of the loops (21, 22, 23, 24) of the first circuit are each connected, via channels (131a, 131b, 132a, 132b, 133a, 133b, 134a, 134b) of the network of channels of the connection member (1) to a respective reagent-dispenser channel (231a, 232a, 233a, or 234a) and to a respective aliquot-outlet channel (231b, 232b, 233b, or 234b).

3. A sampling valve according to claim 1, **characterized in that** the connection member (1) is designed to take a third position such that a fraction only (23, 24) of the sampling loops of the first circuit are each connected, via channels of the network of channels of the connection member (1), to a respective reagent-dispenser channel and to a respective aliquot-outlet channel, and to take at least other functional position such that at least one other distinct fraction (21, 22) of the sampling loops of the first circuit are each connected, via channels of the network of channels of the connection member (1), to a respective reagent-dispenser channel and to a respective aliquot-outlet channel.

4. A sampling valve according to claim 3, **characterized in that** the second position for connecting the fluid inlet (100) to the second sampling circuit is also another functional position such that at least one other fraction (21, 22) of the sampling loops of the first circuit are each connected via channels of the network of channels of the connection member (1) to a respective reagent-dispenser channel and to a respective aliquot-outlet channel.

5. A sampling valve according to claim 3, **characterized in that** each of the sampling loop fractions is constituted by a pair of sampling loops (21 & 22 and 23 & 24).

6. A sampling valve according to claim 3, **characterized in that** each sampling loop fractions is constituted by a single sampling valve loop.

7. A sampling valve according to claim 1, **characterized in that** the connection member (1) is also a dispenser member carrying the reagent-dispenser channels and the aliquot-outlet channels of the sampling valve.

8. A sampling valve according to claim 1, **characterized in that** the sampling member (2) is also a dispenser member carrying the reagent-dispenser channels and the aliquot-outlet channels of the sampling valve.

9. A sampling valve according to claim 1, **characterized in that** the members (1, 2) are disks that are movable in rotation relative to each other.

10. A sampling valve according to claim 1, **characterized in that** the connection member (1) carries a channel constituting the fluid inlet to the valve.

11. A sampling valve according to claim 1, **characterized in that** the sampling member (2) carries a channel constituting the fluid inlet into the valve.

12. A sampling valve according to claim 1, **characterized in that** the fluid is a biological fluid and the first circuit is dedicated to routine analyses and the second circuit is dedicated to particular analyses.

13. A fluid analysis appliance comprising at least one sampling valve according to any preceding claim.

14. A method of sampling a fluid using a sampling valve according to any one of claims 1 to 12 and implemented in an analysis appliance according to claim 13, the method being **characterized in that** it comprises the following steps:
• taking up the first position;
• filling the first sampling circuit by sucking fluid placed in the collecting vessel towards the valve inlet;
• taking up the second position;
• filling the second sampling circuit by sucking fluid placed in the collecting vessel towards the valve inlet;
• taking up the third position;
• dispensing reagents over at least one loop of the first sampling circuit towards one or more analysis means;
• taking up the first position;
• dispensing reagents over at least the loop of the second sampling circuit to one or more sampling means;
• rinsing the first sampling circuit by sucking in a rinsing fluid placed in a rinsing container, it being possible to perform this step before, after, or simultaneously with the preceding step;
• taking up the second position; and
• rinsing the second sampling circuit by sucking in a rinsing fluid placed in a rinsing container.

## Patentansprüche

1. Ventil zur Probenahme eines Fluids aus einem selben Entnahmebehälter für mehrere Analysen unter Verwendung von Reagenzien, wobei das Ventil zwei Elemente umfaßt, die miteinander auf einer ihrer Seiten, Kontaktseite genannt, in Kontakt sind, wobei diese beiden Elemente zueinander beweglich sind, wobei jedes Element ein Netz von Kanälen umfaßt, die für eine Fluidzirkulation bestimmt sind und von denen mindestens gewisse auf ihrer Kontaktseite münden, **dadurch gekennzeichnet, daß** das Kanalnetz eines der sogenannten Probenahmeelemente (2) mindestens drei unabhängige Probenahmeschleifen (21, 22, 23, 24, 25) umfaßt, die jeweils dazu bestimmt sind, einen aliquoten Anteil des Fluids zu enthalten, wobei das Probenahmeventil über mindestens ebenso viele Kanäle zur Verteilung von Reagenzien (31 a, 32a, 33,a, 34a, 35a) und Kanäle zur Abgabe der aliquoten Anteile (31 b, 32b, 33b, 34b, 35b) wie Schleifen verfügt, und das andere sogenannte Anschlußelement (1) dazu bestimmt ist, mindestens drei unterschiedliche Betriebspositionen in bezug zum Probenahmeelement einzunehmen:
- eine erste Position, die es ermöglicht, einen Fluideingang (100) in das Ventil mit einer ersten Probenahmeschaltung, umfassend eine Vielzahl von Probenahmeschleifen (21, 22, 23, 24), zu verbinden, während sie miteinander durch Kanäle (121, 122, 123, 124) des Kanalnetzes des Anschlußelements (1) verbunden sind, die nun spezifisch mit jeder Schleife (21, 22, 23 oder 24) ausgerichtet sind, wobei es diese erste Position auch ermöglicht, durch einen oder mehrere Kanäle (135a, 135b) des Kanalnetzes des Anschlußelements (1) mindestens eine Schleife (25) einer zweiten Probenahmeschaltung, umfassend mindestens eine Probenahmeschleife (25), mit einem Kanal zur Verteilung eines Reagens (235a) und einem Kanal zur Abgabe des aliquoten Anteils (235b) zu verbinden,
- eine zweite Position, die es ermöglicht, den Fluideingang (100) mit der zweiten Probenahmeschaltung (25) zu verbinden,
- eine dritte Position, in der mindestens eine Probenahmeschleife (21, 22, 23 oder 24) der ersten Schaltung durch Kanäle (131 a, 131 b, 132a, 132b, 133a, 133b oder 134a, 134b) des Kanalnetzes des Anschlußelements (1) an einen Kanal zur Verteilung eines Reagens (231 a, 232a, 233a oder 234a) und an einen Kanal zur Abgabe des aliquoten Anteils (231 b, 232b, 233b oder 234b) angeschlossen ist.

2. Probenahmeventil nach Anspruch 1, **dadurch gekennzeichnet, daß** in der dritten Position alle Schleifen (21, 22, 23, 24) der ersten Schaltung jeweils durch Kanäle (131 a, 131 b, 132a, 132b, 133a, 133b, 134a, 134b) des Kanalnetzes des Anschlußelements (1) an einen Kanal zur Verteilung eines Reagens (231 a, 232a, 233a oder 234a) und an einen Kanal zur Abgabe des aliquoten Anteils (231 b, 232b, 233b oder 234b) angeschlossen sind.

3. Probenahmeventil nach Anspruch 1, **dadurch gekennzeichnet, daß** das sogenannte Anschlußelement (1) dazu bestimmt ist, eine derartige dritte Position einzunehmen, daß nur ein Teil (23, 24) der Probenahmeschleifen der ersten Schaltung jeweils durch Kanäle des Kanalnetzes des Anschlußelements (1) an einen Kanal zur Verteilung eines Reagens und an einen Kanal zur Abgabe des aliquoten Anteils angeschlossen ist, und mindestens eine derartige weitere Betriebsposition einzunehmen, daß mindestens ein weiterer unterschiedlicher Teil (21, 22) der Probenahmeschleifen der ersten Schaltung durch Kanäle des Kanalnetzes des Anschlußelements (1) an einen Kanal zur Verteilung eines Reagens und an einen Kanal zur Abgabe des aliquoten Anteils angeschlossen ist.

4. Probenahmeventil nach einem der Ansprüche 1 bis 3, **dadurch gekennzeichnet, daß** die zweite Position, die es ermöglicht, den Fluideingang (100) mit der zweiten Probenahmeschaltung zu verbinden, auch eine weitere Funktionsposition ist, so daß mindestens ein weiterer Teil (21, 22) der Probenahmeschleifen der ersten Schaltung jeweils durch Kanäle des Kanalnetzes des Anschlußelements (1) mit einem Kanal zur Verteilung eines Reagens und einem Kanal zur Ausgabe des aliquoten Anteils verbunden ist.

5. Probenahmeventil nach Anspruch 3, **dadurch gekennzeichnet, daß** die Teile der Probenahmeschleifen jeweils von einem Paar (21, 22 und 23, 24) von Probenahmeschleifen gebildet sind.

6. Probenahmeventil nach Anspruch 3, **dadurch gekennzeichnet, daß** die Teile der Probenahmeschleifen jeweils von einer einzigen Probenahmeschleife gebildet sind.

7. Probenahmeventil nach Anspruch 1, **dadurch gekennzeichnet, daß** das Anschlußelement (1) auch ein Verteilungselement ist, das die Kanäle zur Verteilung von Reagenzien und die Kanäle zur Ausgabe der aliquoten Anteile des Probenahmeventils trägt.

8. Probenahmeventil nach Anspruch 1, **dadurch gekennzeichnet, daß** das Probenahmeelement (2) auch ein Verteilungselement ist, das die Kanäle zur Verteilung von Reagenzien und die Kanäle zur Ausgabe der aliquoten Anteile des Probenahmeventils trägt.

9. Probenahmeventil nach Anspruch 1, **dadurch gekennzeichnet, daß** die Elemente (1, 2) Scheiben sind, die zueinander drehbeweglich sind.

10. Probenahmeventil nach Anspruch 1, **dadurch gekennzeichnet, daß** das Anschlußelement (1) einen Kanal trägt, der den Fluideingang in das Ventil darstellt.

11. Probenahmeventil nach Anspruch 1, **dadurch gekennzeichnet, daß** das Probenahmeventil (2) einen Kanal trägt, der den Fluideingang in das Ventil darstellt.

12. Probenahmeventil nach Anspruch 1, **dadurch gekennzeichnet, daß**, da das Fluid ein biologisches Fluid ist, die erste Schaltung für die Routineanalysen und die zweite Schaltung für die Sonderanalysen bestimmt ist.

13. Gerät zur Fluidanalyse, umfassend mindestens ein Probenahmeventil nach einem der vorhergehenden Ansprüche.

14. Verfahren zur Probenahme eines Fluids, das ein Probenahmeventil nach einem der Ansprüche 1 bis 12 verwendet und in einem Analysegerät nach Anspruch 13 eingesetzt wird, **dadurch gekennzeichnet, daß** es die folgenden Schritte umfaßt:
- Anordnen in der ersten Position,
- Befüllen der ersten Probenahmeschaltung durch Ansaugen des Fluids, das in dem Entnahmebehälter angeordnet ist, zum Eingang des Ventils,
- Anordnen in der zweiten Position,
- Befüllen der zweiten Probenahmeschaltung durch Ansaugen des Fluids, das in dem Entnahmebehälter angeordnet ist, zum Eingang des Ventils,
- Anordnen in der dritten Position,
- Verteilen von Reagenzien auf mindestens einer Schleife der ersten Probenahmeschaltung zu einem oder mehreren Analysemitteln,
- Anordnen in der ersten Position,
- Verteilen von Reagenzien auf mindestens der Schleife der zweiten Probenahmeschaltung zu einem oder mehreren Analysemitteln,
- Spülen der ersten Probenahmeschaltung durch Ansaugen eines Spülfluids, das in einem sogenannten Spülbehälter angeordnet ist, wobei dieser Schritt vor, nach oder gleichzeitig mit dem vorhergehenden durchgeführt werden kann,
- Anordnen in der zweiten Position,
- Spülen der zweiten Probenahmeschaltung durch Ansaugen eines Spülfluids, das in einem sogenannten Spülbehälter angeordnet ist.
